# EUROPÄISCHE PATENTANMELDUNG

(11) **EP 4 696 535 A1**
(43) Veröffentlichungstag der Anmeldung: **18.02.2026**
(21) Anmeldenummer: 25191615.1
(22) Anmeldetag: 24.07.2025
(51) Int. Cl.: B60K 17/356, F16H 61/4043, F16H 61/431

(54) **VERFAHREN ZUM BETREIBEN EINER HYDROPUMPE MITTELS ANSCHLEPPEN**

(30) Priorität: 14.08.2024 DE 102024123229
(71) Anmelder: MAN Truck & Bus SE, 80995 München (DE)
(72) Erfinder: Beierer, Philipp, 80995 München (DE); Resch, Franz-Georg, 80995 München (DE); Hendrich, Lars, 80995 München (DE)

(57) **Zusammenfassung**

Die Erfindung betrifft ein Verfahren zum Betreiben einer Hydropumpe (24) eines hydrostatischen Hilfsantriebs (20) eines Kraftfahrzeugs. Die Hydropumpe (24) ist dabei mittels einer Kupplungseinrichtung (32) mit einem Hauptantrieb (10) des Kraftfahrzeugs trieblich koppelbar. Ferner weist der hydrostatische Hilfsantrieb (20) mindestens einen Hydromotor (26), der durch mechanisches Antreiben auch als Pumpe betreibbar ist, und ein Leitungssystem (28), über das die Hydropumpe (24) und der mindestens eine Hydromotor (26) hydraulisch miteinander verbindbar sind, auf. Das Verfahren weist ein Inbetriebnehmen der Hydropumpe (24) auf, wobei das Inbetriebnehmen ein hydraulisches Verbinden der Hydropumpe (24) und des mindestens einen Hydromotor (26) mittels des Leitungssystems (28) aufweist. Ferner weist das Inbetriebnehmen ein Fördern von Hydraulikfluid von dem mindestens einen Hydromotor (26) über das Leitungssystem zu der Hydropumpe (24) durch ein mechanisches Antreiben des mindestens einen Hydromotors (26) auf. Weiterhin weist das Inbetriebnehmen ein hydraulisches Antreiben der Hydropumpe (24) durch Durchströmen der Hydropumpe (24) mit dem geförderten Hydraulikfluid auf. Schließlich weist das Inbetriebnehmen ein triebliches Koppeln der hydraulisch angetriebenen Hydropumpe (24) mit dem Hauptantrieb (10) mittels der Kupplungseinrichtung (32) auf.

## Beschreibung

Die Erfindung betrifft ein Verfahren zum Betreiben einer Hydropumpe eines hydrostatischen Hilfsantriebs, eine Antriebsvorrichtung für ein Kraftfahrzeug, die zur Durchführung des Verfahrens ausgebildet ist, sowie ein Kraftfahrzeug mit einer solchen Antriebsvorrichtung.

Es ist grundsätzlich bekannt, Kraftfahrzeuge mit einem hydrostatischen Hilfsantrieb zum Antrieb einer Hilfsantriebsachse des Kraftfahrzeugs auszustatten. In der Regel kann dieser Hilfsantrieb bei Bedarf, z. B. beim Fahren auf rutschigen Untergrund, Schlamm und/oder Schotter, zur Traktionsunterstützung einer Hauptantriebsachse des Kraftfahrzeugs zeitweise zugeschaltet werden.

Der hydrostatische Hilfsantrieb kann hierbei derart ausgeführt sein, dass eine Hydropumpe über ein Leitungssystem mit mindestens einem Hydromotor der Hilfsantriebsachse verbindbar ist. Bevorzugt erfolgt der Antrieb der Hydropumpe dabei mittels des Hauptantriebs des Kraftfahrzeugs. Beispielsweise kann der Antrieb der Hydropumpe über eine Getriebeeinrichtung in einem festen Verhältnis zum Hauptantrieb stehen. Da die Traktionsunterstützung überwiegend in einem niedrigen Geschwindigkeitsbereich benötigt wird, erfolgt die Kopplung der Hydropumpe mit dem Hauptantrieb vorteilhaft über eine Kupplungseinrichtung, z. B. mit einer oder mehreren Kupplungen. Dadurch kann die hydrostatische Traktionsunterstützung in einem niedrigen Fahrzeuggeschwindigkeitsbereich die Hauptantriebsache unterstützen und ab einer vorgewählten Fahrgeschwindigkeit eine Trennung vom Hauptantrieb erfolgen.

Die Kupplungseinrichtung zur Kopplung der Hydropumpe an den Hauptantrieb ist vorteilhaft bei stehendem Fahrzeug oder während der Fahrt, ggf. unter Last, schaltbar. Für das Schalten unter Last ergeben sich je nach Art der Kupplung weitere Einschränkungen, z. B. in Form von Drehmomentbegrenzungen. Im Allgemeinen wird ein möglichst geringes Drehmoment beim Schalten der Kupplungseinrichtung angestrebt, da dadurch die Kupplungseinrichtung einfacher, leichter, und kompakter gestaltet werden kann. Ein wesentlicher Teil des an der Kupplungseinrichtung vorherrschenden Drehmoments wird bei dem oben beschriebenen hydrostatischen Hilfsantrieb, insbesondere beim Anfahren, durch die Hydropumpe (z. B. aufgrund von Stick-Slip-Effekten) und durch die Viskosität des Hydraulikfluids erzeugt.

Die Positionierung der Kupplungseinrichtung zum An- und Abkuppeln der Hydropumpe an den bzw. vom Hauptantrieb kann grundsätzlich beliebig erfolgen. Bedingt durch die Übersetzung ändern sich jedoch die Randbedingungen für die Komponente: In der Nähe der Hydropumpe ist das Drehmoment am geringsten und die Drehzahl am höchsten. Je größer das Übersetzungsverhältnis zwischen Hydropumpe und Kupplungseinrichtung ist, desto größer wird das Drehmoment und desto kleiner die Drehzahl an der Kupplung.

Aus Bauraumgründen und/oder aus anderen Gründen kann es vorteilhaft sein, die Kupplungseinrichtung möglichst weit von der Hydropumpe entfernt zu positionieren. Dadurch erhöht sich dann jedoch das Schleppmoment durch die Übersetzung bzw. durch die Getriebeeinrichtung bis zur Kupplungseinrichtung. Dies ist insbesondere dann nachteilig, wenn die Kupplungseinrichtung konstruktiv so umgesetzt wird, dass zwischen Anlauf- und Betriebsmomentübertragung (z. B. Faktor 10 größer als Anlaufmoment) unterschieden wird.

Aufgabe der Erfindung ist es, eine Lösung bereitzustellen, die einen verbesserten Betrieb einer Hydropumpe eines hydrostatischen Hilfsantriebs ermöglicht. Bevorzugt ist es Aufgabe der Erfindung, eine Lösung bereitzustellen, mittels derer eine Inbetriebnahme der Hydropumpe vereinfacht werden kann, insbesondere durch Reduzieren eines Schleppmoments der Hydropumpe bei deren Inbetriebnahme, um dadurch einen Schaltvorgang einer zwischen der Hydropumpe und dem Antrieb angeordneten Kupplungseinrichtung zu erleichtern.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten unabhängigen Aspekt der vorliegenden Offenbarung wird ein Verfahren zum Betreiben einer (z. B. Hochdruck-)Hydropumpe eines (z. B. zuschaltbaren) hydrostatischen Hilfsantriebs eines Kraftfahrzeugs (z. B. eines Nutzfahrzeugs) bereitgestellt. Die Hydropumpe, welche bspw. auch als Hydraulikpumpe oder hydraulische Pumpe bezeichnet werden kann, kann z. B. als Radialkolbenpumpe, Axialkolbenpumpe oder Drehkolbenpumpe ausgebildet sein.

Die Hydropumpe ist mittels einer (z. B. formschlüssigen und/oder reibschlüssigen) Kupplungseinrichtung mit einem Hauptantrieb (z. B. einem Verbrennungsmotor und/oder Elektromotor) des Kraftfahrzeugs trieblich koppelbar. Beispielsweise können die Hydropumpe und der Hauptantrieb mittels der Kupplungseinrichtung wahlweise trieblich miteinander verbindbar oder trieblich voneinander trennbar sein.

Weiterhin weist der hydrostatische Hilfsantrieb mindestens einen (z. B. Hochdruck-)Hydromotor (z. B. mindestens einen Radialkolben-Radnabenmotor) und ein (z. B. Hydraulik-)Leitungssystem auf. Bevorzugt ist der mindestens eine Hydromotor dabei mindestens einem Rad des Kraftfahrzeugs zugeordnet und/oder mit mindestens einem Rad des Kraftfahrzeugs trieblich verbunden. Der mindestens eine Hydromotor ist (z. B. über eine Rollbewegung des mindestens einen Rades) auch als (z. B. Hydro-)Pumpe betreibbar (z. B. zumindest zweitweise). Beispielsweise kann mittels des mindestens einen Hydromotors durch mechanisches und/oder drehendes Antreiben einer (eigentlichen) Abtriebswelle des Hydromotors Hydraulikfluid im Leitungssystem förderbar sein. Über das Leitungssystem sind die Hydropumpe und der mindestens eine Hydromotor hydraulisch miteinander verbindbar oder verbunden. Beispielsweise kann über das Leitungssystem Hydraulikfluid zwischen dem mindestens einen Hydromotor und der Hydropumpe austauschbar sein.

Das Verfahren weist ein Inbetriebnehmen der (z. B. stillstehenden) Hydropumpe auf.

Das Inbetriebnehmen der Hydropumpe seinerseits weist ein hydraulisches Verbinden der Hydropumpe und des mindestens einen Hydromotors mittels des Leitungssystems auf. Beispielsweise kann das hydraulische Verbinden ein Schalten eines oder mehrerer Ventile des Leitungssystems umfassen, bspw. um dadurch eine Hydraulik- bzw. Fluidverbindung zwischen der Hydropumpe und dem mindestens einen Hydromotor freizugeben und/oder herzustellen.

Weiterhin weist das Inbetriebnehmen der Hydropumpe ein Fördern von Hydraulikfluid von dem mindestens einen Hydromotor über das Leitungssystem zu der Hydropumpe durch ein (z. B. durch eine Fahrbewegung des Kraftfahrzeugs hervorgerufenes) mechanisches Antreiben (z. B. Schleppen) des mindestens einen Hydromotors auf. Bevorzugt wird der mindestens eine Hydromotor beim Fördern des Hydraulikfluids bzw. beim mechanischen Antreiben somit im Schubbetrieb und/oder als Pumpe betrieben.

Ferner weist das Inbetriebnehmen der Hydropumpe ein hydraulisches Antreiben der Hydropumpe durch Durchströmen der Hydropumpe mit dem geförderten Hydraulikfluid auf. Bevorzugt wird die Hydropumpe somit mittelbar über eine (z. B. durch den Hauptantrieb bewirkte) Fahrbewegung des Kraftfahrzeugs in Bewegung versetzt. Besonders bevorzugt erfolgt dies, um dadurch ein Schleppmoment der Hydropumpe zu reduzieren.

Weiterhin weist das Inbetriebnehmen der Hydropumpe ein triebliches Koppeln der hydraulisch angetriebenen Hydropumpe mit dem (z. B. laufenden) Hauptantrieb mittels der Kupplungseinrichtung auf. Beispielsweise kann dies durch ein Schließen einer Kupplung der Kupplungseinrichtung erfolgen.

Auf vorteilhafte Weise kann durch das Schleppen des mindestens einen mit der Hydropumpe hydraulisch gekoppelten Hydromotors die Hydropumpe vor dem Koppeln bzw. Schließen der Kupplungseinrichtung in Bewegung versetzt werden. Im Vergleich zu einem Ankoppeln einer stillstehenden Hydropumpe kann hierdurch das an der Kupplungseinrichtung wirkende Schleppmoment der Hydropumpe für den Schaltvorgang auf vorteilhafte Weise reduziert werden bzw. eine Drehzahlangleichung zum Hauptantrieb erfolgen. Aufgrund der mittelbaren Kopplung von Hauptantrieb und Hydropumpe über die Räder bzw. die Fahrbewegung des Kraftfahrzeugs kann sich dabei die Drehzahlangleichung quasi automatisch einstellen. Als Folge der Minimierung des Schleppmoments bzw. der Drehzahlunterschiede kann zudem auf vorteilhafte Weise eine vorrangig nach dem Formschlussprinzip wirkende Kupplungseinrichtung eingesetzt werden, die in der Regel kleiner bzw. kompakter ausgelegt werden kann als bspw. eine reine Reibkupplungseinrichtung. Dies spart auf vorteilhafte Weise Kosten, Bauraum und Gewicht und erhöht mitunter auch die Funktionssicherheit der Kupplungseinrichtung.

Gemäß einem ersten Aspekt kann das Inbetriebnehmen der Hydropumpe (z. B. vor dem Fördern von Hydraulikfluid) ferner ein Erzeugen einer Fahrbewegung des Kraftfahrzeugs durch Antreiben des Kraftfahrzeugs (z. B. einer Hauptantriebsachse des Kraftfahrzeugs) mittels des Hauptantriebs aufweisen. Beispielsweise kann der Hauptantrieb hier einen Vortrieb des Kraftfahrzeugs bewirken.

Zudem oder alternativ kann der mindestens eine Hydromotor mit zumindest einem Rad des Kraftfahrzeugs trieblich gekoppelt (z. B. verbunden) sein. Beispielsweise kann der mindestens eine Hydromotor als Radnabenmotoren oder radnaher Motor ausgebildet sein. Ferner kann das mechanische Antreiben des mindestens einen Hydromotors über eine Drehbewegung des zumindest einen Rades aufgrund einer (oder der) Fahrbewegung des Kraftfahrzeugs (z. B. aufgrund einer oder der vom Hauptantrieb erzeugten Fahrbewegung des Kraftfahrzeugs) erfolgen. Auf vorteilhafte Weise kann dadurch ein Teil der Bewegungsenergie des Kraftfahrzeugs für ein mittelbares In-Bewegung-Versetzen der Hydropumpe vor dem trieblichen Koppeln genutzt werden.

Zudem oder alternativ kann das mechanische Antreiben des mindestens einen Hydromotors ein Schleppen des mindestens einen Hydromotors durch das Kraftfahrzeug und/oder ein Betreiben des mindestens einen Hydromotors in einem Schubbetrieb aufweisen. Auch dies ermöglicht auf vorteilhafte Weise die Bewegung des Kraftfahrzeugs für ein mittelbares In-Bewegung-Versetzen der Hydropumpe vor dem trieblichen Koppeln zu nutzen.

Nach einem weiteren Aspekt kann das triebliche Koppeln in Abhängigkeit einer (z. B. mittels Drehzahlsensoren erfasster) Drehzahldifferenz zwischen einem hauptantriebsseitigen Eingang der Kupplungseinrichtung und einem hydropumpenseitigen Ausgang der Kupplungseinrichtung erfolgen. Bevorzugt erfolgt das triebliche Koppeln dabei dann, wenn die Drehzahldifferenz einen (z. B. vorbestimmten) Grenzwert unterschreitet. Auf vorteilhafte Weise kann dadurch ein verschleißschonendes Schalten der Kupplungseinrichtung sichergestellt werden.

Gemäß einem weiteren Aspekt kann das Inbetriebnehmen der Hydropumpe ferner ein hydraulisches Kurzschließen einer Saugseite der Hydropumpe mit einer Druckseite der Hydropumpe nach dem trieblichen Koppeln der Hydropumpe mit dem Hauptantrieb aufweisen, vorzugsweise um dadurch das hydraulische Antreiben der Hydropumpe zu beenden. Bevorzugt erfolgt das hydraulische Kurzschließen dabei derart, dass von der Hydropumpe gefördertes Hydraulikfluid (z. B. in einem geschlossenen Kreis) direkt (z. B. ohne einen Verbraucher des hydrostatischen Hilfsantriebs zu versorgen) an die Hydropumpe zurückgeführt wird. Lediglich beispielhaft kann das hydraulische Kurzschließen über einen geeigneten, die Saug- und Druckseite der Hydropumpe miteinander verbindenden, Kurzschlusskreis des Leitungssystems erfolgen, welcher bspw. durch entsprechendes Schalten ein oder mehrere Schaltventile des Leitungssystems bedarfsweise ausbildbar ist. Auf vorteilhafte Weise kann dadurch in Betriebszuständen, in denen keine Traktionsunterstützung durch den hydrostatischen Hilfsantrieb erforderlich ist, ein möglichst energiesparender Betrieb der Hydropumpe realisiert werden.

Nach einem weiteren Aspekt kann der mindestens eine Hydromotor einen Arbeitszustand aufweisen, in dem der mindestens eine Hydromotor das Hydraulikfluid und einen Abtrieb (z. B. eine Abtriebswelle oder ein Rotorgehäuse) des mindestens einen Hydromotors miteinander kraftübertragend koppelt. Weiterhin kann der mindestens eine Hydromotor einen Freilaufzustand aufweisen, in dem der Abtrieb frei drehbar ist und/oder keine Kraftübertragung zwischen dem Abtrieb und dem Hydraulikfluid erfolgt. Beispielsweise kann der mindestens eine Hydromotor als Radialkolben-Radnabenmotor ausgebildet sein, aufweisend mindestens einen ein- und ausfahrbaren Radialkolben und einen Nockenring, wobei der mindestens eine Radialkolben im Arbeitszustand ausgefahren ist und am Nockenring abläuft und im Freilaufzustand eingefahren ist und keinen Kontakt zum Nockenring aufweist. Auf vorteilhafte Weise kann dadurch bedarfsgerecht eine Kraftübertragung zwischen Fahrbahn und dem hydrostatischen Hilfsantrieb wahlweise ermöglicht oder unterbrochen werden.

In einer Ausführungsform kann das Inbetriebnehmen der Hydropumpe vor dem Fördern von Hydraulikfluid ferner ein Versetzen des mindestens einen Hydromotors (z. B. von dem Freilaufzustand) in den Arbeitszustand aufweisen. Beispielsweise kann hierzu der mindestens eine Radialkolben des mindestens einen Hydromotors ausgefahren werden. Auf vorteilhafte Weise kann dadurch ein Schleppen bzw. Schubbetrieb des mindestens einen Hydromotors ermöglicht werden.

Zudem oder alternativ kann das Inbetriebnehmen der Hydropumpe nach dem trieblichen Koppeln ferner ein Versetzen des mindestens einen Hydromotors (z. B. von dem Arbeitszustand) in den Freilaufzustand aufweisen. Beispielsweise kann hierzu der mindestens eine Radialkolben des mindestens einen Hydromotors eingefahren werden. Bevorzugt erfolgt das Versetzen des mindestens einen Hydromotors in den Freilaufzustand, um dadurch das hydraulische Antreiben der Hydropumpe zu beenden. Auf vorteilhafte Weise kann dadurch in Betriebszuständen, in denen keine Traktionsunterstützung durch den hydrostatischen Hilfsantrieb erforderlich ist, ein möglichst energiesparender Betrieb der Hydropumpe realisiert werden.

Gemäß einem weiteren Aspekt kann das Inbetriebnehmen der Hydropumpe nach dem trieblichen Koppeln ferner ein mechanisches Antreiben der mit dem Hauptantrieb gekoppelten (z. B. hydraulisch angetriebenen oder hydraulisch nicht angetriebenen) Hydropumpe mittels des Hauptantriebs aufweisen. Beispielsweise kann der Hauptantrieb eine Antriebswelle der Hydropumpe mechanisch und/oder drehend antreiben. Bevorzugt erfolgt das mechanische Antreiben der Hydropumpe dabei zur Förderung von Hydraulikfluid mittels der Hydropumpe (z. B. durch das Leitungssystem).

Nach einem weiteren Aspekt kann die Kupplungseinrichtung eine formschlüssige Kupplung (z. B. eine Klauenkupplung) mit einer (z. B. reibschlüssigen) Synchronisierung (z. B. einer Lamellensynchronisation) aufweisen. Durch die Synchronisierung können auf vorteilhafte Weise Drehzahlunterschiede beim Schaltvorgang zumindest teilweise ausgeglichen werden und dadurch insgesamt ein möglichst verschleißarmes Schalten der Kupplungseinrichtung sichergestellt werden. Ein weiterer Vorteil ist, dass durch die oben genannte Ausführung der Kupplungseinrichtung eine möglichst kompakte bzw. kleine Kupplungsgeometrie erreicht werden kann.

Zudem oder alternativ kann bei dem trieblichen Koppeln die Hydropumpe über eine (z. B. zwischen der Kupplungseinrichtung und der Hydropumpe angeordnete) Getriebeeinrichtung mit dem Hauptantrieb trieblich gekoppelt werden. Bevorzugt weist die Getriebeeinrichtung dabei eine feste (bzw. unveränderliche) Übersetzung auf. Diese kann bspw. in Abhängigkeit der Fördervolumen der Hydropumpe, in Abhängigkeit eines Schluckvolumens mindestens eines Hydromotors des hydrostatischen Hilfsantriebs und/oder in Abhängigkeit von einem Übersetzungsverhältnis einer Hauptantriebsachse des Kraftfahrzeugs festgelegt sein. Auf vorteilhafte Weise können dadurch die an der Kupplungseinrichtung wirkenden Drehmoment-/Drehzahl-Verhältnisse eingestellt werden.

Gemäß einem weiteren Aspekt kann der hydrostatische Hilfsantrieb zum Antrieb einer Hilfsantriebsachse des Kraftfahrzeugs dienen. Als Achse kann dabei entsprechend der Definition in B. Heißing (Hrsg.) et al., Fahrwerkshandbuch (DOI 10.1007/978-3-8348-8168-7), Kapitel 4, bspw. die gesamte Verbindung zweier Räder und Radaufhängung für Einzelräder samt ihrer Anbindung an das Fahrgestell bzw. den Fahrgestellrahmen verstanden werden. Ein üblicher PKW weist damit in der Regel zwei Achsen und vier Radaufhängungen auf. Bevorzugt kann die Hilfsantriebsachse dabei eine (z. B. lenkbare) Vorderachse, eine liftbare Hinterachse, eine Vorlaufachse oder eine Nachlaufachse des Kraftfahrzeugs sein. Auf vorteilhafte Weise kann dadurch eine hydrostatische Traktionsunterstützung für Fahrten auf schwierigem Untergrund, wie z. B. Schlamm und/oder Schotter, bereitgestellt werden.

Zudem oder alternativ kann der Hauptantrieb zum Antrieb einer Hauptantriebsachse des Kraftfahrzeugs dienen. Beispielsweise kann die Hauptantriebsachse eine (z. B. ungelenkte) Hinterachse des Kraftfahrzeugs sein.

Zudem oder alternativ kann der Hauptantrieb einen Verbrennungsmotor und/oder einen Elektromotor aufweisen.

Nach einem weiteren Aspekt kann der mindestens eine Hydromotor zwei Hydromotoren aufweisen, die bevorzugt jeweils einem Rad des Kraftfahrzeugs zugeordnet sind. Beispielsweise kann einer der zwei Hydromotoren einem linken Rad des Kraftfahrzeugs und der andere der zwei Hydromotoren einem rechten Rad des Kraftfahrzeugs zugeordnet sein. Bevorzugt sind die zwei Hydromotoren dabei zwei Radnabenmotoren, besonders bevorzugt zwei Radialkolben-Radnabenmotoren.

Gemäß einem weiteren Aspekt kann ein (z. B. geometrisches) Fördervolumen der Hydropumpe wahlweise auf einen ersten Fördervolumenwert oder einen zweiten Fördervolumenwert einstellbar sein. Bevorzugt ist der zweite Fördervolumenwert größer als der erste Fördervolumenwert. Beispielsweise kann der erste Fördervolumenwert ein minimaler Fördervolumenwert der Hydropumpe sein, während der zweite Fördervolumenwert ein maximaler Fördervolumenwert der Hydropumpe sein kann.

Als Fördervolumen, welches auch als Verdrängungsvolumen bezeichnet werden kann, kann hierbei bspw. ein je Umdrehung der Hydropumpe (bzw. deren Antriebwelle) geförderte Hydraulikfluidvolumen (z. B. in cm³) verstanden werden. Das Fördervolumen lässt sich z. B. rechnerisch aus den geometrischen Abmessungen der Verdrängungsräume der Hydropumpe oder durch Messungen ermitteln. Das Produkt aus Fördervolumen und Drehzahl wird auch als Förder- bzw. Volumenstrom bezeichnet.

Nach einem weiteren Aspekt kann das Inbetriebnehmen der Hydropumpe vor dem Fördern von Hydraulikfluid ferner ein Einstellen des Fördervolumens der Hydropumpe auf den zweiten (z. B. maximalen) Fördervolumenwert aufweisen. Bevorzugt erfolgt dies, um die Hydropumpe anschließend beim Fördern von Hydraulikfluid möglichst schonend zu beschleunigen und/oder dabei Überdrehzahlen zu vermeiden.

Gemäß einem weiteren Aspekt kann die Hydropumpe ein (z. B. mechanisches) Stellelement (z. B. ein Stellglied) zum Einstellen des Fördervolumens der Hydropumpe aufweisen. Beispielsweise kann über das Stellelement ein Schwenkwinkel der Hydropumpe veränderbar sein. Das Stellelement kann seinerseits mit einem hydraulischen Steuerkreis gekoppelt sein. Beispielsweise kann das Stellelement mit einem hydraulischen Aktor des hydraulischen Steuerkreises wirkverbunden sein. Das Einstellen des Fördervolumens der Hydropumpe kann dabei durch ein Betätigen des Stellelements mittels des hydraulischen Steuerkreises erfolgen. Auf vorteilhafte Weise kann dadurch eine zuverlässige Einstellbarkeit des Fördervolumens der Hydropumpe sichergestellt werden.

In einer Ausführungsform kann der hydraulische Steuerkreis eine Förderpumpe zur Förderung eines Steuerfluids aufweisen. Bevorzugt ist die Förderpumpe dabei (z. B. über eine Drehmomentübertragungseinrichtung) von dem Hauptantrieb und/oder von einem (z. B. mit der Förderpumpe direkt verbundenen und/oder vom Hauptantrieb separaten) Pumpenantrieb (z. B. ein Pumpenelektromotor) mechanisch antreibbar.

Weiterhin kann der hydraulische Steuerkreis einen hydraulischen Aktor aufweisen, der mit dem Stellelement gekoppelt (z. B. verbunden) ist und der über eine Fluidverbindung mit dem von der Förderpumpe geförderten Steuerfluid beaufschlagbar ist. Beispielsweise kann der mit dem Stellelement gekoppelte hydraulische Aktor ausgebildet sein, in einem unbeaufschlagten Zustand das Stellelement in einer ersten Stellposition zu halten und in einem beaufschlagten Zustand das Stellelement in einer zweiten Stellposition zu halten.

Weiterhin kann der hydraulische Steuerkreis eine Ventileinrichtung aufweisen, durch die die Fluidverbindung (zwischen dem hydraulischen Aktor und der Förderpumpe) wahlweise freigebbar oder absperrbar ist, vorzugsweise um dadurch den hydraulischen Aktor wahlweise mit Steuerfluid zu beaufschlagen oder nicht. Auf vorteilhafte Weise kann dadurch wiederum eine zuverlässige Einstellbarkeit des Fördervolumens der Hydropumpe sichergestellt werden.

Nach einem weiteren Aspekt kann das Fördervolumen der Hydropumpe (z. B. kontinuierlich) auf mehrere weitere Fördervolumenwerte zwischen dem ersten Fördervolumenwert und dem zweiten Fördervolumenwert einstellbar sein. Beispielsweise kann das Fördervolumen der Hydropumpe kontinuierlich oder in mehreren Schritten zwischen einem minimalen Fördervolumenwert und einem maximalen Fördervolumenwert der Hydropumpe einstellbar sein.

Weiterhin kann in diesem Zusammenhang das Inbetriebnehmen der Hydropumpe vor dem trieblichen Koppeln ein Verändern (z. B. Reduzieren) des Fördervolumens der (z. B. hydraulisch angetriebenen und/oder auf den ersten Fördervolumen eingestellten) Hydropumpe von dem zweiten Fördervolumenwert auf einen der mehreren weiteren Fördervolumenwerte aufweisen. Entsprechend kann vorzugsweise das Fördervolumen der Hydropumpe vor dem trieblichen Koppeln (z. B. schrittweise) erniedrigt werden. Bevorzugt erfolgt das vorgenannte Verändern des Fördervolumens der angetriebenen Hydropumpe derart, dass (z. B. durch den entsprechenden weiteren Fördervolumenwert) die Drehzahldifferenz zwischen einem (oder dem) hauptantriebsseitigen Eingang der Kupplungseinrichtung und einem (oder dem) hydropumpenseitigen Ausgang der Kupplungseinrichtung minimiert wird. Beispielsweise kann das Verändern des Fördervolumens derart erfolgen, dass mittels einer Optimierungsmethode (z. B. mittels gradientenbasierten Newtonverfahrens, dynamischer Programmierung, Heuristik und/oder mittels eines neuronalen Netzes), derjenige Fördervolumenwert aus den mehreren weiteren Fördervolumenwerte ausgewählt wird, welcher die Drehzahldifferenz zwischen dem hauptantriebsseitigen Eingang der Kupplungseinrichtung und dem hydropumpenseitigen Ausgang der Kupplungseinrichtung minimiert.

Gemäß einem weiteren Aspekt kann der zweite Fördervolumenwert ein maximaler Fördervolumenwert der Hydropumpe sein und/oder eine maximale Förderung von Hydraulikfluid bewirken.

Zudem oder alternativ kann der erste Fördervolumenwert ein minimaler Fördervolumenwert der Hydropumpe sein und/oder eine Nullförderung der Hydropumpe bewirken. Beispielsweise kann bei einem Betrieb der Hydropumpe mit dem ersten Fördervolumenwert im Wesentlichen nur eine sehr geringe Förderung von Hydraulikfluid (z. B. zum Ausgleich von Leckverlusten) oder im Wesentlichen keine Förderung von Hydraulikfluid von der Hydropumpe erfolgen.

Zudem oder alternativ kann das Inbetriebnehmen der Hydropumpe nach dem trieblichen Koppeln ferner ein (z. B. erneutes) Einstellen des Fördervolumens der (z. B. mechanisch und/oder hydraulisch angetriebenen) Hydropumpe auf den zweiten Fördervolumenwert aufweisen. Bevorzugt ist der zweite Fördervolumenwert dabei ein maximaler Fördervolumenwert der Hydropumpe. Beispielsweise kann bei einem Betrieb der Hydropumpe mit dem zweiten Fördervolumenwert je Umdrehung ein maximal mögliches Hydraulikfluidvolumen von der Hydropumpe gefördert werden. Auf vorteilhafte Weise kann dadurch eine ausreichende Versorgung des hydrostatischen Hilfsantriebs mit Hydraulikfluid sichergestellt werden.

Je nachdem, ob die Hydropumpe zuvor auf den zweiten Fördervolumenwert oder auf den einen der mehreren weiteren Fördervolumenwerte eingestellt war, kann das Einstellen des Fördervolumens der Hydropumpe auf den zweiten Fördervolumenwert hierbei ferner bspw. ein Verändern des Fördervolumens der Hydropumpe von dem einen der mehreren weiteren Fördervolumenwerte auf den zweiten Fördervolumenwert aufweisen.

Nach einem weiteren Aspekt kann das Verfahren ein Außerbetriebsetzen der (z. B. auf den zweiten Fördervolumenwert eingestellten und/oder mittels der Kupplungseinrichtung trieblich mit einem Hauptantrieb gekoppelten und/oder vom Hauptantrieb angetriebenen) Hydropumpe aufweisen. Das Außerbetriebsetzen der Hydropumpe kann dabei bspw. nach dem Inbetriebnehmen der Hydropumpe erfolgen. Die im Zusammenhang mit dem Außerbetriebsetzen stehenden Merkmal sollen jedoch auch unabhängig von dem Inbetriebnehmen der Hydropumpe offenbart und beanspruchbar sein. Mit andern Worten kann das Verfahren zum Betreiben der Hydropumpe grundsätzlich auch ausschließlich das Außerbetriebsetzen der Hydropumpe, ohne die entsprechenden Schritte des Inbetriebnehmens, aufweisen, wobei die hierein im Zusammenhang mit dem Inbetriebnehmen beschriebenen Merkmale auch unabhängig von dem eigentlichen Inbetriebnehmen ausschließlich im Zusammenhang mit dem Außerbetriebsetzen offenbart und beanspruchbar sein sollen.

Das Außerbetriebsetzen der Hydropumpe kann dabei optional ein hydraulisches Kurzschließen einer (oder der) Saugseite der Hydropumpe mit einer (oder der) Druckseite der (z. B. auf den zweiten Fördervolumenwert eingestellten und/oder mittels der Kupplungseinrichtung trieblich mit einem Hauptantrieb gekoppelten und/oder vom Hauptantrieb angetriebenen) Hydropumpe aufweisen. Bevorzugt erfolgt das hydraulische Kurzschließen dabei derart, dass von der Hydropumpe gefördertes Hydraulikfluid (z. B. in einem geschlossenen Kreis) direkt (z. B. ohne einen Verbraucher des hydrostatischen Hilfsantrieb zu versorgen) an die Hydropumpe zurückgeführt wird. Auf vorteilhafte Weise kann dadurch das an der Kupplungseinrichtung wirkende Schleppmoment der Hydropumpe reduziert werden.

Das Außerbetriebsetzen der Hydropumpe kann ferner bevorzugt ein Einstellen des Fördervolumens der (z. B. hydraulisch kurzgeschlossenen und/oder auf den zweiten Fördervolumenwert eingestellten und/oder mittels der Kupplungseinrichtung trieblich mit einem Hauptantrieb gekoppelten und/oder vom Hauptantrieb angetriebenen) Hydropumpe auf den ersten Fördervolumenwert aufweisen. Beispielsweise kann das Einstellen des Fördervolumens ein Verändern des Fördervolumens von dem zweiten Fördervolumenwert auf den ersten Fördervolumenwert umfassen. Bevorzugt ist der erste Fördervolumenwert dabei ein minimaler Fördervolumenwert der Hydropumpe. Weiterhin bevorzugt erfolgt das Einstellen des Fördervolumens, um dadurch ein Schleppmoment der Hydropumpe (z. B. weiter) zu reduzieren.

Das Außerbetriebsetzen der Hydropumpe kann weiterhin ein triebliches Entkoppeln der (z. B. auf den ersten Fördervolumenwert eingestellten) Hydropumpe von dem Hauptantrieb mittels der Kupplungseinrichtung aufweisen. Beispielsweise kann dies durch ein Öffnen einer Kupplung der Kupplungseinrichtung erfolgen. Auf vorteilhafte Weise kann dadurch erreicht werden, dass beim Abkoppeln bzw. Öffnen der Kupplungseinrichtung ein möglichst geringes Schleppmoment der Hydropumpe an der Kupplungseinrichtung wirkt, da bspw. in der Hydropumpe aufgrund des geringen Fördervolumens nur geringe Strömungsverluste auftreten.

Ein weiterer unabhängiger Aspekt der vorliegenden Offenbarung betrifft eine Antriebsvorrichtung für ein Kraftfahrzeug (z. B. ein Nutzfahrzeug).

Die Antriebsvorrichtung weist dabei einen Hauptantrieb (z. B. zum Antrieb einer Hauptantriebsachse des Kraftfahrzeugs) auf. Beispielsweise kann der Hauptantrieb als Verbrennungsmotor und/oder Elektromotor ausgebildet sein.

Weiterhin weist die Antriebsvorrichtung einen (z. B. zuschaltbaren) hydrostatischen Hilfsantrieb (z. B. zum Antrieb einer Hilfsantriebsachse des Kraftfahrzeugs) auf. Der hydrostatische Hilfsantrieb weist seinerseits eine (z. B. Hochdruck-)Hydropumpe, mindestens einen (z. B. Hochdruck-)Hydromotor, der durch mechanisches Antreiben auch als Pumpe betreibbar ist, und ein Leitungssystem, über das die Hydropumpe und der mindestens eine Hydromotor hydraulisch miteinander verbindbar oder verbunden sind, auf.

Die Antriebsvorrichtung weist ferner eine (z. B. formschlüssige und/oder reibschlüssige) Kupplungseinrichtung auf, mittels derer die Hydropumpe trieblich mit dem Hauptantrieb koppelbar ist.

Die Antriebsvorrichtung weist weiterhin eine Verarbeitungseinrichtung (z. B. Steuereinrichtung) auf, mittels derer ein Betrieb des Hauptantriebs und/oder ein Schalten des Leitungssystems und/oder ein Koppeln der Kupplungseinrichtung auslösbar ist. Bevorzugt ist mittels der Verarbeitungseinrichtung auch ein Einstellen des Fördervolumens der Hydropumpe und/oder ein wahlweises Versetzen des mindestens einen Hydromotors in den Arbeits- oder Freilaufzustand auslösbar. Beispielsweise kann die Verarbeitungseinrichtung hierzu über entsprechende Signalleitungen mit dem Hauptantrieb und/oder den Komponenten des Hilfsantriebs und/oder der Kupplungseinrichtung verbunden sein. Die Verarbeitungseinrichtung ist hierbei konfiguriert, ein Verfahren wie hierin offenbart (z. B. automatisiert) auszuführen. Folglich sollen die vorstehend im Zusammenhang mit dem Verfahren beschriebenen Merkmale auch im Zusammenhang mit der Antriebsvorrichtung offenbart und beanspruchbar sein. Entsprechendes soll auch umgekehrt gelten.

Ein weiterer unabhängiger Aspekt der vorliegenden Offenbarung betrifft ein Kraftfahrzeug, aufweisend eine Antriebsvorrichtung, wie hierin beschrieben. Bevorzugt ist das Kraftfahrzeug ein Nutzfahrzeug. Unter einem Nutzfahrzeug kann dabei im Allgemeinen bspw. ein Fahrzeug verstanden werden, das durch seine Bauart und Einrichtung speziell zur Beförderung von Personen, zum Transport von Gütern oder zum Ziehen von Anhängerfahrzeugen ausgelegt ist. Beispielsweise kann das Nutzfahrzeug ein Lastkraftwagen, ein Sattelschlepper, ein Baustellenfahrzeug und/oder ein Omnibus sein.

Die zuvor beschriebenen Ausführungsformen und Merkmale sind beliebig miteinander kombinierbar. Weitere Einzelheiten und Vorteile werden im Folgenden unter Bezug auf die beigefügten Zeichnungen beschrieben. Es zeigen:
- Figur 1: eine schematische Schnittdarstellung einer Antriebsvorrichtung für ein Kraftfahrzeug gemäß einer Ausführungsform;
- Figur 2: eine schematische Schnittdarstellung einer Antriebsvorrichtung für ein Kraftfahrzeug gemäß einer weiteren Ausführungsform;
- Figur 3: ein Flussdiagramm eines Verfahrens zum Betreiben einer Hydropumpe mittels einer Antriebsvorrichtung gemäß einer Ausführungsform; und
- Figur 4: ein Flussdiagramm eines Verfahrens zum Betreiben einer Hydropumpe mittels einer Antriebsvorrichtung gemäß einer weiteren Ausführungsform.

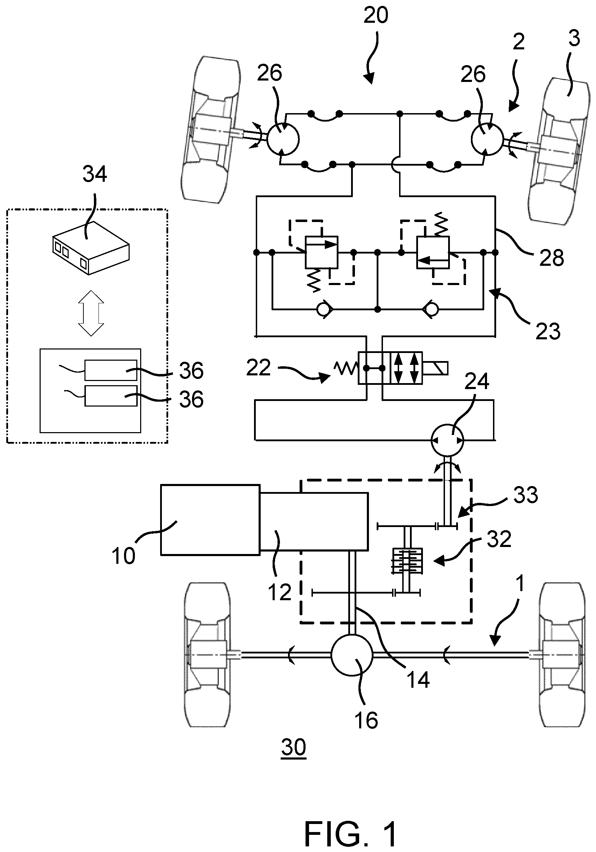

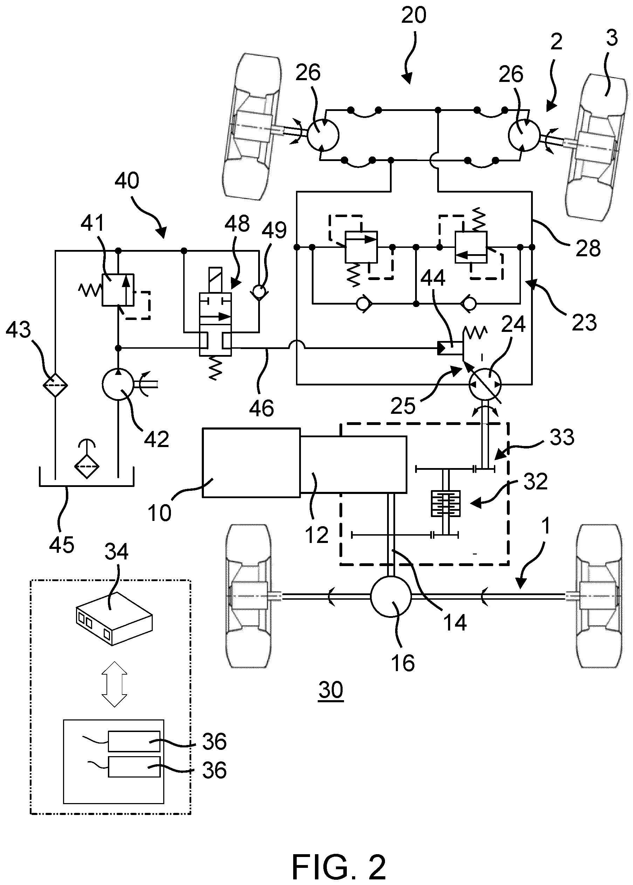

Die in den Figuren 1 und 2 gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figu-ren verwiesen wird, um Wiederholungen zu vermeiden.

Die Figuren 1 und 2 zeigen jeweils eine Antriebsvorrichtung 30 für ein Kraftfahrzeug. Bei dem Kraftfahrzeug kann es sich bspw. um ein Nutzfahrzeug, wie z. B. einen Lastkraftwagen, Sattelschlepper oder Omnibus handeln.

Das Kraftfahrzeug kann mehrere Achsen aufweisen. Beispielsweise kann das Kraftfahrzeug mindestens eine Hauptantriebsachse 1 mit einem linken und rechten Rad 3 sowie mindestens eine Hilfsantriebsachse 2 mit einem linken und rechten Rad 3 aufweisen. Lediglich beispielhaft kann, wie dargestellt, die mindestens eine Hauptantriebsachse 1 eine ungelenkte (bzw. starre) Hinterachse umfassen, während die mindestens eine Hilfsantriebsachse 2 eine lenkbare Vorderachse umfassen kann. Zudem oder alternativ kann die mindestens eine Hilfsantriebsachse 2 jedoch bspw. auch eine liftbare Hinterachse, eine Vorlaufachse und/oder eine Nachlaufachse aufweisen. Weiterhin kann auch die mindestens eine Hauptantriebsachse 1 zusätzlich oder alternativ zur ungelenkten Hinterachse eine Vorderachse aufweisen.

Die Antriebsvorrichtung 30 weist einen Hauptantrieb 10, einen hydrostatischen Hilfsantrieb 20, eine Kupplungseinrichtung 32 und eine Verarbeitungseinrichtung 34 auf.

Bevorzugt dient der Hauptantrieb 10 zum Antrieb der Hauptantriebsachse 1 des Kraftfahrzeugs. Hierzu kann der Hauptantrieb 10 bspw. über ein Fahrzeuggetriebe 12 und eine Abtriebswelle 14 mit einem Eingang eines Differentials 16 der mindestens einen Hauptantriebsachse 1 trieblich verbunden oder verbindbar sein. Der Hauptantrieb 10 kann bspw. ein Verbrennungsmotor oder ein Elektromotor sein. Der Hauptantrieb 10 kann ausgebildet sein, das Kraftfahrzeug alleine anzutreiben und/oder alleine einen Vortrieb des Kraftfahrzeugs zu bewirken.

Der hydrostatische Hilfsantrieb 20 ist bevorzugt zur (z. B. zeit- und/oder bedarfsweisen) Traktionsunterstützung des Hauptantriebs 10 ausgebildet. Beispielsweise kann der hydrostatische Hilfsantrieb 20 bei Fahrten auf rutschigen Untergrund, Schlamm und/oder Schotter, vom Fahrer manuell zuschaltbar sein. Grundsätzlich kann der hydrostatische Hilfsantrieb 20 allerdings auch vom Kraftfahrzeug automatisch aktiviert werden, wenn bspw. auf Basis von sensorisch erfassten Daten eine Traktionsunterstützung als notwendig oder vorteilhaft festgestellt wird.

Der hydrostatische Hilfsantrieb 20 kann zum Antrieb der Hilfsantriebsachse 2 dienen. Entsprechend kann das Kraftfahrzeug mittels des hydrostatischen Hilfsantriebs 20, vorzugsweise zusätzlich zum Hauptantrieb 10, antreibbar sein und/oder ein Vortrieb des Kraftfahrzeugs bewirkt werden.

Der hydrostatische Hilfsantrieb 20 weist bevorzugt eine Hydropumpe 24, mindestens einen Hydromotor 26 und ein (z. B. Hydraulik-)Leitungssystem 28 auf.

Die Hydropumpe 24 kann hierbei über die Kupplungseinrichtung 32 mit dem Hauptantrieb 10 trieblich koppelbar sein. Beispielsweise kann eine Antriebswelle der Hydropumpe 24 über die Kupplungseinrichtung 32 mit der Abtriebswelle 14 koppelbar sein, sodass ein von dem Hauptantrieb 10 erzeugtes Drehmoment an die Hydropumpe 24 übertragbar ist. Entsprechend kann die Hydropumpe 24 mittelbar von dem Hauptantrieb 10 mechanisch und/oder drehend antreibbar sein.

Die Kupplungseinrichtung 32 kann bspw. eine formschlüssige Kupplung (z. B. eine Klauenkupplung) mit einer reibschlüssigen Synchronisierung aufweisen. Zudem oder alternativ kann die Kupplungseinrichtung 32 auch ein Kegel-Reibkupplung aufweisen.

Weiterhin ist es möglich, dass zwischen der Hydropumpe 24 und der Kupplungseinrichtung 32 oder zwischen der Kupplungseinrichtung 32 und dem Hauptantrieb 10 eine Getriebeeinrichtung 33, z. B. aufweisend mehrere ineinander kämmende Zahnräder, angeordnet ist. Bevorzugt weist die Getriebeeinrichtung 33 eine feste Übersetzung auf. Die (feste) Übersetzung kann bspw. in Abhängigkeit der Auslegung der Komponenten des hydrostatischen Hilfsantriebs 20 festgelegt sein.

Über das bereits erwähnte Leitungssystem 28 können die Hydropumpe 24 und der mindestens eine Hydromotor 26 miteinander hydraulisch verbindbar oder verbunden sein. Beispielsweise kann das Leitungssystem 28 mehrere Rohr-, Schlauch- und/oder Leitungsabschnitte aufweisen. Über das Leitungssystem 28 kann Hydraulikfluid zwischen der Hydropumpe 24 und dem mindestens einen Hydromotor 26 austauschbar sein. Beispielsweise kann die Hydropumpe 24 über das Leitungssystem 28 den mindestens einen Hydromotor 26 mit von der Hydropumpe 24 gefördertem Hydraulikfluid versorgen.

Der mindestens eine Hydromotor 26 kann einem Rad 3 des Kraftfahrzeugs zugeordnet sein und/oder trieblich mit einem Rad 3 des Kraftfahrzeugs verbunden sein. Beispielsweise kann der mindestens eine Hydromotor 26 einen Abtrieb aufweisen, der mit dem entsprechenden Rad 3 des Kraftfahrzeugs verbunden ist. Der Abtrieb kann bspw. in Form einer Abtriebswelle oder in Form eines Rotorgehäuses ausgebildet sein. Mittels des mindestens einen Hydromotors 26 kann somit das Rad 3 antreibbar sein bzw. ein Vortrieb des Kraftfahrzeugs bewirkt werden.

Der mindestens eine Hydromotor 26 kann für einen Motorbetrieb ausgelegt sein. Entsprechend kann der mindestens eine Hydromotor 26 ausgebildet sein, hydraulische Energie des von der Hydropumpe 24 geförderten Hydraulikfluids in mechanische Energie umzuwandeln, z. B. in eine Drehbewegung des Abtriebs. Dieser Vorgang kann auch als hydraulisches Antreiben bezeichnet werden. Der mindestens eine Hydromotor 26 kann jedoch auch zumindest zeitweise als (z. B. Hydro-)Pumpe betreibbar sein. Beispielsweise kann durch ein (z. B. äußeres) mechanisches Antreiben des mindestens einen Hydromotors 26 zumindest zeitweise auch Hydraulikfluid mittels des mindestens einen Hydromotors 26 förderbar sein. Entsprechend kann in diesem Pumpenbetrieb mittels des mindestens einen Hydromotors 26 mechanische Energie in hydraulische Energie umwandelbar sein.

Das mechanische Antreiben des mindestens einen Hydromotors 26 bzw. dessen Abtriebswelle kann hierbei bspw. durch eine Fahrbewegung des Kraftfahrzeugs bewirkt werden. Mit anderen Worten kann der mindestens eine Hydromotor 26 in dem Pumpenbetrieb durch das Kraftfahrzeug geschleppt werden und/oder in einem Schubbetrieb betrieben werden. Hierbei kann eine Drehbewegung des entsprechenden Rades 3 aufgrund der Fahrbewegung des Kraftfahrzeugs, welche bspw. durch ein Antreiben der Hauptantriebsache 1 des Kraftfahrzeugs durch den Hauptantrieb 10 erfolgen kann, über den Abtrieb in den mindestens einen Hydromotor 26 eingeleitet werden und dort in hydraulische Energie bzw. eine Förderung von Hydraulikfluid umgesetzt werden.

Wie in den Figuren 1 und 2 dargestellt, umfasst der mindestens eine Hydromotor 26 bevorzugt (zumindest) zwei Hydromotoren 26, wobei einer der zwei Hydromotoren 26 mit dem linken Rad 3 und der andere der zwei Hydromotoren 26 mit dem rechten Rad 3 der Hilfsantriebsachse 2 trieblich verbunden sein kann.

Die beiden Hydromotoren 26 können dabei bspw. jeweils als Radnabenmotoren oder radnahe Motoren ausgebildet sein. Bevorzugt sind die beiden Hydromotoren 26 dabei jeweils als Radialkolben-Radnabenmotoren ausgebildet. Jeder der Radialkolben-Radnabenmotoren kann einen Zylinderblock aufweisen, der (bspw. mittels einer Innenverzahnung) mit der Abtriebswelle des jeweiligen Radialkolben-Radnabenmotors drehfest verbunden sein kann. Weiterhin kann jeder der Radialkolben-Radnabenmotoren jeweils mehrere radial ein- und ausfahrbare Radialkolben aufweisen, die sternförmig im Zylinderblock angeordnet sein können und von einem Nockenring umgeben werden können. In einem Arbeitszustand können die jeweiligen Radialkolben zur Ausführung einer Hubbewegung gesteuert mit Hydraulikfluid be- und entlasten werden, wobei die jeweiligen Radialkolben an einer Innenkontur des Nockenrings gleitend ablaufen können. Dadurch kann eine Umsetzung der linearen Hubbewegung der Radialkolben in eine Drehbewegung des Zylinderblocks und der damit verbundenen Abtriebswelle erfolgen. Entsprechend können im Arbeitszustand das Hydraulikfluid und der Abtrieb miteinander kraftübertragend gekoppelt sein.

Beispielsweise durch ein Beaufschlagen einer jeweiligen Steuerkammer der Radialkolben-Radnabenmotoren mit Druck können die Radialkolben-Radnabenmotoren ferner auch in einen Freilaufzustand überführbar sein. In diesem können die jeweiligen Radialkolben keinen Kontakt zum Nockenring aufweisen und der Abtrieb frei drehbar sein. Entsprechend können im Freilaufzustand das Hydraulikfluid und der Abtrieb voneinander kraftübertragend entkoppelt sein.

Zur Versorgung der beiden Hydromotoren 26 mit Hydraulikfluid können diese jeweils einen Hydraulikfluid-Eingang und einen Hydraulikfluid-Ausgang aufweisen. Wie dargestellt, kann dabei von der Hydropumpe 24 zu einer Druckseite der Hydropumpe 24 gefördertes Hydraulikfluid über das Leitungssystem 28 den jeweiligen Hydraulikfluid-Eingängen der Hydromotoren 26 zuführbar sein. Weiterhin kann von den jeweiligen Hydraulikfluid-Ausgängen abgegebenes Hydraulikfluid über das Leitungssystem 28 zur Saugseite der Hydropumpe 24 rückführbar sein.

Wie in Figur 1 dargestellt, kann der hydrostatische Hilfsantrieb 20 bzw. das Leitungssystem 28 zumindest ein Steuerventil 22, bspw. in Form eines 4/2-Wegeventils, aufweisen. Mittels des zumindest einen Steuerventils 22 kann eine Hydraulikverbindung zwischen der Hydropumpe 24 und dem mindestens einen Hydromotor 26 wahlweise unterbrechbar oder freigebbar sein. Beispielsweise kann das zumindest eine Steuerventil 22 einen ersten Schaltzustand aufweisen, in dem die Druck- und Saugseite der Hydropumpe 24 (z. B. in einem geschlossenen Kreis) hydraulisch kurzgeschlossen sind. In diesem ersten Schaltzustand kann das von der Hydropumpe 24 geförderte Hydraulikfluid direkt und/oder nahezu verlustlos (z. B. auf einem nahezu widerstandslosen Kurzschlusspfad) an die Hydropumpe zurückgeführt werden, ohne dass der mindestens eine Hydromotor 26 mit Hydraulikfluid versorgt wird. Durch entsprechende Dimensionierung des Kurzschlusspfades können Leistungsverluste des umlaufenden Hydraulikfluids gering gehalten werden, sodass sich die Hydropumpe 24 bevorzugt quasi im Freilauf befindet. Aufgrund des Druckausgleichs zwischen Vor- und Rücklauf kann sich im ersten Schaltzustand kein Druck bzw. daraus abgeleitet auch kein Moment an dem mindestens einen Hydromotor 26 und an der Hydropumpe 24 aufbauen. Bevorzugt befindet sich der mindestens eine Hydromotor 26 dabei im Freilaufzustand bzw. "ausgekuppelten" Zustand, sodass entsprechend kein Hydraulikfluid über und/oder durch den mindestens einen Hydromotor 26 fließt. Der Ast des hydrostatischen Hilfsantriebs 20 zwischen dem Steuerventil 22 und der Hilfsantriebsachse 2 kann somit zwar mit der Hydropumpe 24 verbunden sein, jedoch ruht in dem Teil des Kreises das Hydraulikfluid und die Umwälzung erfolgt lediglich zwischen der Hydropumpe 24 und dem Steuerventil 22.

Weiterhin kann das zumindest eine Steuerventil 22 einen zweiten Schaltzustand aufweisen, in dem der mindestens eine Hydromotor 26 als Verbraucher zwischen der Druck- und Saugseite der Hydropumpe 24 angeordnet ist. Entsprechend kann der mindestens eine Hydromotor 26 im zweiten Schaltzustand mit von der Hydropumpe 24 gefördertem Hydraulikfluid versorgt bzw. durchströmt werden.

Optional kann der hydrostatische Hilfsantrieb 20 bzw. das Leitungssystem 28 ferner eine Überdrucksicherungseinheit 23 aufweisen. Diese kann zwischen der Druck- und Saugseite der Hydropumpe 24 parallel zu dem mindestens einen Hydromotor 26 angeordnet sein. Die Überdrucksicherungseinheit 23 kann zwei Druckbegrenzungsventile und zwei Rückschlagventile aufweisen. Die zwei Druckbegrenzungsventile können hierbei mit entgegengesetzter Ausrichtung in Reihe angeordnet sein, wobei jeweils eines der Rückschlagventile parallel zu jeweils einem der Druckbegrenzungsventile und in unterschiedlicher Richtung zum jeweiligen Druckbegrenzungsventil wirkend angeordnet ist. Durch die Überdrucksicherungseinheit 23 kann ein maximaler Hydraulikdruck der Saugseite und ein maximaler Hydraulikdruck der Druckseite der Hydropumpe 24 einstellbar sein.

Bei der vorgenannten Hydropumpe 24 kann es sich grundsätzlich um eine Konstant-Hydropumpe handeln. Bevorzugt handelt es sich jedoch um eine Verstell-Hydropumpe. Beispielsweise kann ein Fördervolumen der Hydropumpe 24 wahlweise auf einen ersten Fördervolumenwert oder einen zweiten Fördervolumenwert einstellbar sein. Der erste Fördervolumenwert und der zweite Fördervolumenwert sollen hierbei unterschiedlich sein. Bevorzugt ist der zweite Fördervolumenwert dabei größer als der erste Fördervolumenwert. Beispielsweise kann der erste Fördervolumenwert ein minimaler Fördervolumenwert der Hydropumpe 24 sein und/oder eine Nullförderung der Hydropumpe bewirken. Zudem oder alternativ kann der zweite Fördervolumenwert ein maximaler Fördervolumenwert der Hydropumpe 24 sein.

In einer Ausführungsform kann das Fördervolumen der Hydropumpe 24 ausschließlich auf den ersten oder zweiten Fördervolumenwert einstellbar sein. In diesem Zusammenhang kann auch von einer digitalen Verstell-Hydropumpe mit nur zwei Stellungen gesprochen werden.

Alternativ kann das Fördervolumen der Hydropumpe 24 (z. B. kontinuierlich oder in Stufen) auf zumindest einen weiteren Fördervolumenwert zwischen dem ersten und zweiten Fördervolumenwert einstellbar sein. Bevorzugt weist der zumindest eine weitere Fördervolumenwert mehrere weitere Fördervolumenwerte auf, sodass vorzugsweise das Fördervolumen der Hydropumpe 24 (z. B. kontinuierlich oder in Stufen) auf mehrere weitere Fördervolumenwerte zwischen dem ersten und zweiten Fördervolumenwert einstellbar sein kann.

In allen Fällen kann das Verstellen bzw. Einstellen des Fördervolumens der Hydropumpe 24 bspw. durch im Stand der Technik grundsätzlich bekannte Techniken erfolgen. Beispielsweise kann das Einstellen des Fördervolumens der Hydropumpe 24 durch ein Verschwenken einer Schwenkscheibe der Hydropumpe 24 (z. B. wenn diese als Axialkolbenpumpe ausgebildet ist) oder durch eine exzentrische Hubringverstellung der Hydropumpe 24 (z. B. wenn diese als Radialkolbenpumpe ausgebildet ist) erfolgen. Grundsätzlich kann das Einstellen des Fördervolumens der Hydropumpe 24 durch ein Verändern der Geometrie des oder der Verdrängungsräume der Hydropumpe 24 erfolgen. Entsprechend kann die Hydropumpe 24 zumindest einen in seinen jeweiligen geometrischen Abmessungen veränderbaren Verdrängungsraum aufweisen.

Zum Einstellen des Fördervolumens der Hydropumpe 24 kann diese über ein (z. B. mechanisches) Stellelement 25 verfügen. Beispielsweise kann über das Stellelement 25 ein Schwenkwinkel der Hydropumpe 24 veränderbar oder ein Hubring der Hydropumpe 24 verstellbar sein. Das Stellelement 25 kann bspw. hydraulisch betätigbar sein. Wie in Figur 2 dargestellt, kann das Stellelement 25 dazu mit einem hydraulischen Steuerkreis 40 gekoppelt sein.

Der hydraulische Steuerkreis 40 kann hierbei ein Druckbegrenzungsventil 41, eine Förderpumpe 42, einen Filter 43, einen hydraulischen Aktor 44, einen Steuerfluidbehälter 45, eine Fluidverbindung 46, eine Ventileinrichtung 48 und/oder ein Rückschlagventil 49 aufweisen.

Mittels der Förderpumpe 42 kann Steuerfluid aus dem Steuerfluidbehälter 45 förderbar sein. Aus dem Steuerfluidbehälter 45 kann auch der hydrostatische Hilfsantrieb 20 mit Hydraulikfluid versorgbar sein. Entsprechend kann es sich bei dem Steuerfluid und Hydraulikfluid bspw. um das gleiche Fluid handeln, welches zur besseren Unterscheidung, je nachdem ob es im hydraulische Steuerkreis 40 oder im hydrostatischen Hilfsantrieb 20 zirkuliert, als Steuer- bzw. Hydraulikfluid bezeichnet wird.

Die Förderpumpe 42 kann mit dem Hauptantrieb 10 oder mit einem vom Hauptantrieb 10 separaten (z. B. elektrischen) Pumpenantrieb trieblich verbindbar oder verbunden sein. Das von der Förderpumpe 42 geförderte Steuerfluid kann dann mittels der Ventileinrichtung 48 wahlweise zum Steuerfluidbehälter 45 zurückführbar sein oder über die Fluidverbindung 46 dem hydraulischen Aktor 44 zuführbar sein.

Beispielsweise kann die Ventileinrichtung 48 dazu als 4/2-Wegeventil ausgebildet sein. Die Ventileinrichtung 48 kann bspw. einen ersten Schaltzustand aufweisen, in dem eine Druckseite der Förderpumpe 42 über den Filter 43 mit dem Steuerfluidbehälter 45 verbunden ist. Die Ventileinrichtung 48 kann ferner einen zweiten Schaltzustand aufweisen, in dem die Druckseite der Förderpumpe 42 über die Fluidverbindung 46 dem hydraulischen Aktor 44 verbunden ist. In diesem Schaltzustand kann der hydraulische Aktor 44 mit Steuerfluid beaufschlagt und dadurch bewegt werden.

Der hydraulische Aktor 44 kann dabei mit dem Stellelement 25 verbunden sein, sodass in einem unbeaufschlagten Zustand des hydraulischen Aktors 44 das Stellelement 25 in einer ersten Stellposition gehalten wird und in einem beaufschlagten Zustand des hydraulischen Aktors 44 das Stellelement 25 in einer zweiten Stellposition gehalten wird. Die erste und zweite Stellposition sind dabei jeweils verschiedenen Fördervolumen der Hydropumpe zugeordnet.

Zusätzlich oder alternativ zu der vorstehend beschriebenen exemplarischen hydraulischen Betätigung des Stellelements 25 kann das Stellelement 25 prinzipiell auch pneumatisch, elektrisch und/oder mechanisch betätigbar sein.

Die Antriebsvorrichtung 30 kann ferner ein oder mehrere Drehzahlsensoren 36 aufweisen. Diese können zur Erfassung einer Drehzahl einer sich drehenden Komponente der Antriebsvorrichtung 30 ausgebildet sein. Beispielsweise kann einer der Drehzahlsensoren 36 zur Erfassung der Drehzahl der Hydropumpe 24 bzw. deren Antriebs angeordnet und ausgebildet sein. Ein weiterer Drehzahlsensor 36 kann bspw. eine Drehzahl am hauptantriebsseitigen Eingang der Kupplungseinrichtung 32 messen.

Wie vorstehend erwähnt, weist die Antriebsvorrichtung 30 eine Verarbeitungseinrichtung 34 auf. Die Verarbeitungseinrichtung 34 kann über entsprechende Signalleitungen mit den übrigen Komponenten der Antriebsvorrichtung 30 verbunden sein. Insbesondere kann die Verarbeitungseinrichtung 34 über die entsprechenden Signalleitungen mit den Drehzahlsensoren 36, der Hydropumpe 24, der Kupplungseinrichtung 32, dem zumindest einen Steuerventil 22 und der Ventileinrichtung 48 signaltechnisch verbunden sein.

Mittels der Verarbeitungseinrichtung 34 kann bspw. ein Einstellen des Fördervolumens der Hydropumpe 24 auslösbar sein. Beispielsweise kann die Verarbeitungseinrichtung 34 ausgebildet sein, entsprechende Einstellsignale direkt an die Hydropumpe 24 oder an die Ventileinrichtung 48 des hydraulischen Steuerkreises 40 ausgeben, wodurch das Fördervolumen der Hydropumpe 24 unmittelbar oder mittelbar einstellbar sein kann. Zudem oder alternativ kann die Verarbeitungseinrichtung 34 auch ausgebildet sein, entsprechende Einstellsignale an die Ventileinrichtung 48 auszugeben, wodurch diese wahlweise den ersten oder zweiten Schaltzustand einnehmen kann. Zudem oder alternativ kann die Verarbeitungseinrichtung 34 auch ausgebildet sein, entsprechende Kuppelsignale an die Kupplungseinrichtung 32 auszugeben, wodurch diese wahlweise in einen geöffneten oder geschlossenen Zustand überführbar sein kann.

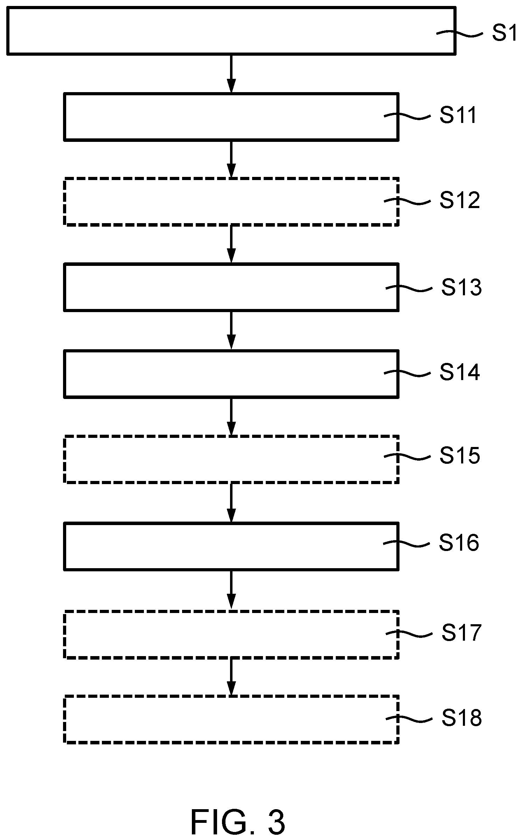

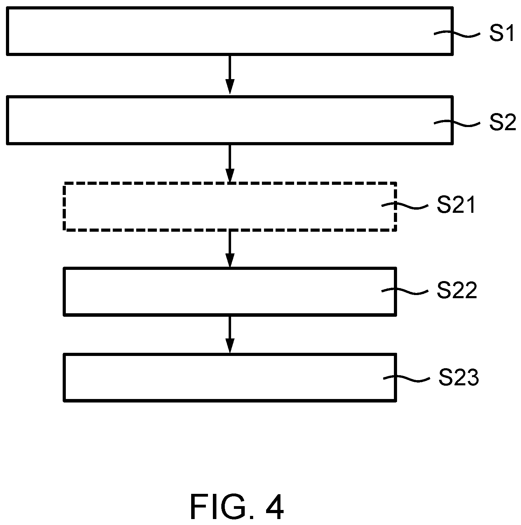

Weiterhin ist die Verarbeitungseinrichtung 34 dazu konfiguriert, ein Verfahren wie hierin beschrieben (z. B. automatisiert) auszuführen. Ein Beispiel für ein derartiges Verfahren wird nun im Folgenden unter Bezugnahme auf die Figuren 3 und 4 näher beschrieben.

Figur 3 zeigt ein Flussdiagramm eines Verfahrens zum Betreiben einer Hydropumpe 24 mittels einer Antriebsvorrichtung 30, wie bspw. im Zusammenhang mit Figur 1 und 2 beschrieben, gemäß einer Ausführungsform.

Im Schritt S1 erfolgt ein Inbetriebnehmen der Hydropumpe 24.

Das Inbetriebnehmen umfasst in einem Schritt S11 ein hydraulisches Verbinden der Hydropumpe 24 und des mindestens einen Hydromotors 26 mittels des Leitungssystems 28. Beispielsweise kann die Verarbeitungseinrichtung 34 hierzu ein entsprechendes Einstellsignal an das zumindest eine Steuerventil 22 ausgeben, wodurch dieses bspw. den zweiten Schaltzustand einnehmen kann. Falls der sich der mindestens eine Hydromotor 26 gerade im Freilaufzustand befindet, kann das Inbetriebnehmen in dem Schritt S11 bevorzugt auch ein Versetzen des mindestens einen Hydromotors 26 (z. B. von dem Freilaufzustand) in den Arbeitszustand aufweisen.

Das Inbetriebnehmen kann ferner in einem optionalen Schritt S12 ein Einstellen des Fördervolumens der Hydropumpe 24 auf den zweiten Fördervolumenwert umfassen. Beispielsweise kann die Verarbeitungseinrichtung 34 hierzu ein entsprechendes Einstellsignal direkt an die Hydropumpe 24 oder an die Ventileinrichtung 48 des hydraulischen Steuerkreises 40 ausgeben, wodurch die Ventileinrichtung 48 bspw. den ersten Schaltzustand einnehmen kann. Bevorzugt ist der erste Fördervolumenwert ein maximaler Fördervolumenwert der Hydropumpe 24.

Ferner umfasst das Inbetriebnehmen in einem Schritt S13 ein Fördern von Hydraulikfluid von dem mindestens einen Hydromotor 26 über das Leitungssystem zu der, vorzugsweise auf den zweiten Fördervolumenwert eingestellten, Hydropumpe 24 durch ein mechanisches Antreiben des mindestens einen Hydromotors 26. Bevorzugt erfolgt das mechanische Antreiben des mindestens einen Hydromotors 26 dabei über eine Drehbewegung des dem mindestens einen Hydromotor 26 zugeordneten bzw. mit diesem trieblich verbundenen Rades 3 aufgrund einer Fahrbewegung des Kraftfahrzeugs. Diese Fahrbewegung kann dabei vom Hauptantrieb 10 bzw. der mit dem Hauptantrieb 10 verbundenen Hauptantriebachse 1 des Kraftfahrzeugs erzeugt werden. Mit anderen Worten kann das mechanische Antreiben des mindestens einen Hydromotors 26 durch ein Schleppen des mindestens einen Hydromotors 26 durch das Kraftfahrzeug und/oder ein Betreiben des mindestens einen Hydromotors 26 in einem Schubbetrieb aufweisen.

Weiterhin umfasst das Inbetriebnehmen in einem Schritt S14 ein hydraulisches Antreiben der, vorzugsweise auf den zweiten Fördervolumenwert eingestellten, Hydropumpe 24 durch Durchströmen der Hydropumpe 24 mit von dem mindestens einen Hydromotor 26 geförderten Hydraulikfluid. Entsprechend kann die Hydropumpe 24 somit mittelbar über die Fahrbewegung des Kraftfahrzeugs in Bewegung versetzt werden.

In einem optionalen Schritt S15 kann das Inbetriebnehmen weiterhin ein Verändern (z. B. Reduzieren) des Fördervolumens der hydraulisch angetriebenen Hydropumpe 24 von dem zweiten Fördervolumenwert auf einen weiteren Fördervolumenwert zwischen dem ersten und zweiten Fördervolumenwert umfassen. Bevorzugt minimiert der weitere Fördervolumenwert dabei eine Drehzahldifferenz zwischen dem hauptantriebsseitigen Eingang der Kupplungseinrichtung 32 und dem hydropumpenseitigen Ausgang der Kupplungseinrichtung 32. Beispielsweise kann der entsprechende weitere Fördervolumenwert mittels Optimierung aus den möglichen Fördervolumenwerten der Hydropumpe 24 ausgewählt werden.

Das Inbetriebnehmen umfasst weiterhin in einem Schritt S16 ein triebliches Koppeln der, vorzugsweise auf den weiteren Fördervolumenwert eingestellten, Hydropumpe 24 mit dem Hauptantrieb 10 mittels der Kupplungseinrichtung 32. Beispielsweise kann die Verarbeitungseinrichtung 34 hierzu ein entsprechendes Kuppelsignal an die Kupplungseinrichtung 32 ausgeben, wodurch bspw. ein Schließen der formschlüssigen Kupplung mit Synchronisierung der Kupplungseinrichtung 32 erfolgt. Da vorzugsweise die Drehzahldifferenz zwischen dem hauptantriebsseitigen Eingang der Kupplungseinrichtung 32 und dem hydropumpenseitigen Ausgang der Kupplungseinrichtung 32 möglichst gering ist, kann hier ein möglichst bauteilschonendes Schalten erfolgen.

Anschließend kann das Inbetriebnehmen in einem optionalen Schritt S17 ein mechanisches Antreiben der mit dem Hauptantrieb 10 gekoppelten Hydropumpe 24 mittels des Hauptantriebs 10 umfassen. Beispielsweise kann hierbei Drehmoment von dem Hauptantrieb 10 über die Kupplungseinrichtung 32 an die Hydropumpe 24 übertragen werden.

Falls keine Traktionsunterstützung durch den hydrostatischen Hilfsantrieb 20 erforderlich ist, kann in einem optionalen Schritt S18 das Inbetriebnehmen ferner ein hydraulisches Kurzschließen der Saugseite der Hydropumpe 24 mit der Druckseite der Hydropumpe umfassen, vorzugsweise derart, dass von der Hydropumpe 24 gefördertes Hydraulikfluid direkt an die Hydropumpe 24 zurückgeführt wird. Beispielsweise kann die Verarbeitungseinrichtung 34 hierzu ein entsprechendes Einstellsignal an das zumindest eine Steuerventil 22 ausgeben, wodurch dieses bspw. den ersten Schaltzustand einnehmen kann. Zudem oder alternativ kann im Schritt 18 das Inbetriebnehmen auch ein Versetzen des mindestens einen Hydromotors 26 (z. B. von dem Arbeitszustand) in den Freilaufzustand aufweisen. Beispielsweise kann die Verarbeitungseinrichtung 34 hierzu ein entsprechendes Einstellsignal an den mindestens einen Hydromotor 26 ausgeben, wodurch dieser in den Freilaufzustand versetzt wird.

Figur 4 zeigt ein Flussdiagramm eines Verfahrens zum Betreiben einer Hydropumpe 24 mittels einer Antriebsvorrichtung 30 gemäß einer weiteren Ausführungsform.

Analog zum vorstehend im Zusammenhang mit Figur 3 beschriebenen Verfahren kann auch hier in einem Schritt S1 ein Inbetriebnehmen der Hydropumpe 24 mit den vorstehend beschrieben Schritten erfolgen.

Zusätzlich oder alternativ zum Inbetriebnehmen kann das Verfahren ferner in einem Schritt S2 ein Außerbetriebsetzen der Hydropumpe 24 aufweisen.

In einem optionalen Schritt S21 kann das Außerbetriebsetzen ein hydraulisches Kurzschließen der Saugseite der Hydropumpe 24 mit der Druckseite der Hydropumpe 24 umfassen, vorzugsweise derart, dass von der Hydropumpe 24 gefördertes Hydraulikfluid direkt an die Hydropumpe 24 zurückgeführt wird. Beispielsweise kann die Verarbeitungseinrichtung 34 hierzu ein entsprechendes Einstellsignal an das zumindest eine Steuerventil 22 ausgeben, wodurch dieses bspw. den ersten Schaltzustand einnehmen kann. Zudem oder alternativ kann in dem optionalen Schritt S21 das Außerbetriebsetzen auch ein Versetzen des mindestens einen Hydromotors 26 in den Freilaufzustand aufweisen. Beispielsweise kann die Verarbeitungseinrichtung 34 hierzu ein entsprechendes Einstellsignal an den mindestens einen Hydromotor 26 ausgeben, wodurch dieser in den Freilaufzustand versetzt wird.

Weiterhin kann das Außerbetriebsetzen in einem Schritt S22 ein Einstellen des Fördervolumens der, vorzugsweise hydraulisch kurzgeschlossenen, Hydropumpe 24 auf den ersten Fördervolumenwert umfassen. Beispielsweise kann die Verarbeitungseinrichtung 34 hierzu ein entsprechendes Einstellsignal direkt an die Hydropumpe 24 oder an die Ventileinrichtung 48 des hydraulischen Steuerkreises 40 ausgeben, wodurch die Ventileinrichtung 48 bspw. den zweiten Schaltzustand einnehmen kann.

Das Außerbetriebsetzen kann ferner in einem Schritt S23 ein triebliches Entkoppeln der auf den ersten Fördervolumenwert eingestellten Hydropumpe 24 von dem Hauptantrieb 10 mittels der Kupplungseinrichtung 32 umfassen. Beispielsweise kann die Verarbeitungseinrichtung 34 hierzu ein entsprechendes Kuppelsignal an die Kupplungseinrichtung 32 ausgeben, wodurch bspw. ein Öffnen der formschlüssigen Kupplung mit Synchronisierung der Kupplungseinrichtung 32 erfolgt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 1: Hauptantriebsachse
- 2: Hilfsantriebsachse
- 3: Rad
- 10: Hauptantrieb
- 12: Fahrzeuggetriebe
- 14: Abtriebswelle
- 16: Differential
- 20: Hilfsantrieb
- 22: Steuerventil
- 23: Überdrucksicherungseinheit
- 24: Hydropumpe
- 25: Stellelement
- 26: Hydromotor
- 28: Leitungssystem
- 30: Antriebsvorrichtung
- 32: Kupplungseinrichtung
- 33: Getriebeeinrichtung
- 34: Verarbeitungseinrichtung
- 36: Drehzahlsensor
- 40: Hydraulischer Steuerkreis
- 41: Druckbegrenzungsventil
- 42: Förderpumpe
- 43: Filter
- 44: Hydraulischen Aktor
- 45: Steuerfluidbehälter
- 46: Fluidverbindung
- 48: Ventileinrichtung
- 49: Rückschlagventil

## Patentansprüche

1. Verfahren zum Betreiben einer Hydropumpe (24) eines hydrostatischen Hilfsantriebs (20) eines Kraftfahrzeugs,
wobei die Hydropumpe (24) mittels einer Kupplungseinrichtung (32) mit einem Hauptantrieb (10) des Kraftfahrzeugs trieblich koppelbar ist; und
wobei der hydrostatische Hilfsantrieb (20) ferner aufweist: mindestens einen Hydromotor (26), der durch mechanisches Antreiben auch als Pumpe betreibbar ist, und ein Leitungssystem (28), über das die Hydropumpe (24) und der mindestens eine Hydromotor (26) hydraulisch miteinander verbindbar sind;
wobei das Verfahren ein Inbetriebnehmen der, vorzugsweise stillstehenden, Hydropumpe (24) aufweist und das Inbetriebnehmen aufweist:
- Hydraulisches Verbinden der Hydropumpe (24) und des mindestens einen Hydromotors (26) mittels des Leitungssystems (28);
- Fördern von Hydraulikfluid von dem mindestens einen Hydromotor (26) über das Leitungssystem zu der Hydropumpe (24) durch ein mechanisches Antreiben des mindestens einen Hydromotors (26);
- Hydraulisches Antreiben der Hydropumpe (24) durch Durchströmen der Hydropumpe (24) mit dem geförderten Hydraulikfluid, vorzugsweise um dadurch ein Schleppmoment der Hydropumpe (24) zu reduzieren; und
- Triebliches Koppeln der hydraulisch angetriebenen Hydropumpe (24) mit dem Hauptantrieb (10) mittels der Kupplungseinrichtung (32).

2. Verfahren nach Anspruch 1, wobei:
das Inbetriebnehmen der Hydropumpe (24) ferner aufweist: Erzeugen einer Fahrbewegung des Kraftfahrzeugs durch Antreiben des Kraftfahrzeugs mittels des Hauptantriebs (10); und/oder
der mindestens eine Hydromotor (26) mit zumindest einem Rad (3) des Kraftfahrzeugs trieblich gekoppelt ist und das mechanische Antreiben des mindestens einen Hydromotors (26) über eine Drehbewegung des zumindest einen Rades (3) aufgrund einer, vorzugsweise vom Hauptantrieb (10) erzeugten, Fahrbewegung des Kraftfahrzeugs erfolgt; und/oder
das mechanische Antreiben des mindestens einen Hydromotors (26) aufweist: Schleppen des mindestens einen Hydromotors (26) durch das Kraftfahrzeug und/oder Betreiben des mindestens einen Hydromotors (26) in einem Schubbetrieb.

3. Verfahren nach Anspruch 1 oder 2, wobei:
das triebliche Koppeln in Abhängigkeit einer, vorzugsweise mittels Drehzahlsensoren (36) erfasster, Drehzahldifferenz zwischen einem hauptantriebsseitigen Eingang der Kupplungseinrichtung (32) und einem hydropumpenseitigen Ausgang der Kupplungseinrichtung (32) erfolgt, vorzugsweise dann, wenn die Drehzahldifferenz einen vorbestimmten Grenzwert unterschreitet.

4. Verfahren nach einem der vorherigen Ansprüche, wobei das Inbetriebnehmen der Hydropumpe (24) ferner aufweist:
- Hydraulisches Kurzschließen einer Saugseite der Hydropumpe (24) mit einer Druckseite der Hydropumpe (24) nach dem trieblichen Koppeln der Hydropumpe (24) mit dem Hauptantrieb (10), derart, dass von der Hydropumpe (24) gefördertes Hydraulikfluid direkt an die Hydropumpe (24) zurückgeführt wird, vorzugsweise, um dadurch das hydraulische Antreiben der Hydropumpe (24) zu beenden.

5. Verfahren nach einem der vorherigen Ansprüche, wobei:
der mindestens eine Hydromotor (26) aufweist:
einen Arbeitszustand, in dem der mindestens eine Hydromotor (26) das Hydraulikfluid und einen Abtrieb des mindestens einen Hydromotors (26) miteinander kraftübertragend koppelt; und
einen Freilaufzustand, in dem der Abtrieb frei drehbar ist und keine Kraftübertragung zwischen dem Abtrieb und dem Hydraulikfluid erfolgt; und
das Inbetriebnehmen der Hydropumpe (24) vor dem Fördern von Hydraulikfluid ferner aufweist:
- Versetzen des mindestens einen Hydromotors (26) in den Arbeitszustand; und/oder
das Inbetriebnehmen der Hydropumpe (24) nach dem trieblichen Koppeln ferner aufweist:
- Versetzen des mindestens einen Hydromotors (26) in den Freilaufzustand, vorzugsweise, um dadurch das hydraulische Antreiben der Hydropumpe (24) zu beenden.

6. Verfahren nach einem der vorherigen Ansprüche, wobei:
das Inbetriebnehmen der Hydropumpe (24) nach dem trieblichen Koppeln ferner aufweist:
- Mechanisches Antreiben der mit dem Hauptantrieb (10) gekoppelten Hydropumpe (24) mittels des Hauptantriebs (10), vorzugsweise zur Förderung von Hydraulikfluid mittels der Hydropumpe (24).

7. Verfahren nach einem der vorherigen Ansprüche, wobei:
die Kupplungseinrichtung (32) eine formschlüssige Kupplung, vorzugsweise eine Klauenkupplung, mit einer, vorzugsweise reibschlüssigen, Synchronisierung aufweist; und/oder
bei dem trieblichen Koppeln die Hydropumpe (24) über eine Getriebeeinrichtung (33) mit dem Hauptantrieb (10) trieblich gekoppelt wird, wobei vorzugsweise die Getriebeeinrichtung (33) eine feste Übersetzung aufweist.

8. Verfahren nach einem der vorherigen Ansprüche, wobei:
der hydrostatische Hilfsantrieb (20) zum Antrieb einer Hilfsantriebsachse (2) des Kraftfahrzeugs dient, wobei vorzugsweise die Hilfsantriebsachse (2) eine lenkbare Vorderachse, eine liftbare Hinterachse, eine Vorlaufachse oder eine Nachlaufachse des Kraftfahrzeugs ist; und/oder
der Hauptantrieb (10) zum Antrieb einer Hauptantriebsachse (1) des Kraftfahrzeugs dient, wobei vorzugsweise die Hauptantriebsachse (1) eine ungelenkte Hinterachse des Kraftfahrzeugs ist; und/oder
der Hauptantrieb (10) einen Verbrennungsmotor und/oder Elektromotor aufweist.

9. Verfahren nach einem der vorherigen Ansprüche, wobei:
der mindestens eine Hydromotor zwei Hydromotoren, vorzugsweise zwei Radnabenmotoren, besonders bevorzugt zwei Radialkolben-Radnabenmotoren, aufweist, wobei die zwei Hydromotoren jeweils einem Rad des Kraftfahrzeugs zugeordnet sind.

10. Verfahren nach einem der vorherigen Ansprüche, wobei:
ein Fördervolumen der Hydropumpe (24) wahlweise auf einen ersten Fördervolumenwert oder einen zweiten Fördervolumenwert, der größer als der erste Fördervolumenwert ist, einstellbar ist; und vorzugsweise:
das Inbetriebnehmen der Hydropumpe (24) vor dem Fördern von Hydraulikfluid ferner aufweist:
- Einstellen des Fördervolumens der Hydropumpe auf den zweiten Fördervolumenwert.

11. Verfahren nach Anspruch 10, wobei:
das Fördervolumen der Hydropumpe (24), vorzugsweise kontinuierlich, auf mehrere weitere Fördervolumenwerte zwischen dem ersten und zweiten Fördervolumenwert einstellbar ist; und
das Inbetriebnehmen der Hydropumpe (24) vor dem trieblichen Koppeln ferner aufweist:
- Verändern, vorzugsweise Reduzieren, des Fördervolumens der hydraulisch angetriebenen Hydropumpe (24) von dem zweiten Fördervolumenwert auf einen der mehreren weiteren Fördervolumenwerte, sodass die Drehzahldifferenz zwischen einem hauptantriebsseitigen Eingang der Kupplungseinrichtung (32) und einem hydropumpenseitigen Ausgang der Kupplungseinrichtung (32) minimiert wird.

12. Verfahren nach Anspruch 10 oder 11, wobei:
der zweite Fördervolumenwert ein maximaler Fördervolumenwert der Hydropumpe (24) ist und/oder eine maximale Förderung von Hydraulikfluid bewirkt; und/oder
der erste Fördervolumenwert ein minimaler Fördervolumenwert der Hydropumpe (24) ist und/oder eine Nullförderung der Hydropumpe (24) bewirkt; und/oder
das Inbetriebnehmen der Hydropumpe (24) nach dem trieblichen Koppeln ferner aufweist:
- Einstellen des Fördervolumens der Hydropumpe (24) auf den zweiten Fördervolumenwert, wobei vorzugsweise der zweite Fördervolumenwert ein maximaler Fördervolumenwert der Hydropumpe (24) ist.

13. Verfahren einem der Ansprüche 10 bis 12, wobei:
das Verfahren ein Außerbetriebsetzen der, vorzugsweise mittels der Kupplungseinrichtung (32) trieblich mit einem Hauptantrieb (10) gekoppelten und vom Hauptantrieb (10) angetriebenen, Hydropumpe (24) aufweist und das Außerbetriebsetzen der Hydropumpe (24) aufweist:
- Vorzugsweise: Hydraulisches Kurzschließen einer Saugseite der Hydropumpe (24) mit einer Druckseite der Hydropumpe (24), derart, dass von der Hydropumpe (24) gefördertes Hydraulikfluid direkt an die Hydropumpe (24) zurückgeführt wird;
- Einstellen des Fördervolumens der, vorzugsweise hydraulisch kurzgeschlossenen, Hydropumpe (24) auf den ersten Fördervolumenwert, vorzugsweise um dadurch ein Schleppmoment der Hydropumpe (24) zu reduzieren; und
- Triebliches Entkoppeln der auf den ersten Fördervolumenwert eingestellten Hydropumpe (24) von dem Hauptantrieb (10) mittels der Kupplungseinrichtung (32).

14. Antriebsvorrichtung (30) für ein Kraftfahrzeug, vorzugsweise Nutzfahrzeug, wobei die Antriebsvorrichtung (30) aufweist:
einen Hauptantrieb (10), vorzugsweise zum Antrieb einer Hauptantriebsachse (1) des Kraftfahrzeugs;
einen hydrostatischen Hilfsantrieb (20), vorzugsweise zum Antrieb einer Hilfsantriebsachse (2) des Kraftfahrzeugs, wobei der hydrostatische Hilfsantrieb (20) aufweist: eine Hydropumpe (24), mindestens einen Hydromotor (26), der durch mechanisches Antreiben auch als Pumpe betreibbar ist, und ein Leitungssystem (28), über das die Hydropumpe (24) und der mindestens eine Hydromotor (26) hydraulisch miteinander verbindbar sind;
eine Kupplungseinrichtung (32), mittels derer die Hydropumpe (24) trieblich mit dem Hauptantrieb (10) koppelbar ist; und
eine Verarbeitungseinrichtung (34), mittels derer ein Betrieb des Hauptantriebs (10), ein Schalten des Leitungssystems (28) und/oder ein Koppeln der Kupplungseinrichtung (32) auslösbar ist, wobei die Verarbeitungseinrichtung (34) konfiguriert ist, ein Verfahren nach einem der vorherigen Ansprüche, vorzugsweise automatisiert, auszuführen.

15. Kraftfahrzeug, vorzugsweise Nutzfahrzeug, aufweisend eine Antriebsvorrichtung nach Anspruch 14.
